## Europäisches Patentamt
## European Patent Office
## Office européen des brevets

(11) Veröffentlichungsnummer: **0 178 415**
A2

(12) **EUROPÄISCHE PATENTANMELDUNG**

(21) Anmeldenummer: 85110259.0

(22) Anmeldetag: 16.08.85

(51) Int. Cl.⁴: **C 01 B 13/10**

(30) Priorität: 18.09.84 DE 3434169

(43) Veröffentlichungstag der Anmeldung:
23.04.86 Patentblatt 86/17

(84) Benannte Vertragsstaaten:
AT BE CH FR GB IT LI NL SE

(71) Anmelder: MESSER GRIESHEIM GMBH
Hanauer Landstrasse 330
D-6000 Frankfurt/Main 1(DE)

(72) Erfinder: Leitzke, Ortwin, Dr.
Raitz von Frenz Strasse 5
D-4044 Kaarst 2(DE)

(72) Erfinder: Wolf, Ewald
Martin Luther Strasse 3
D-6367 Karben 1(DE)

(54) Verfahren zur Gewinnung von Ozon.

(57) Ozon kann aus Sauerstoff in üblichen Ozonerzeugern (4) hergestellt und in einer Druckwechseladsorptionsanlage (6) vom nicht umgewandelten Sauerstoff getrennt werden, indem es dort an einer Adsorptionsmasse angelagert wird. Die Desorption kann mittels eines Spülgases oder durch Unterdruck erfolgen. Die Unterdruckmethode hat den Vorteil, daß das Ozon nicht mit einem Spülgas vermischt wird, sondern in reiner Form mit einem strömenden Medium vermischt und zur Reaktion gebracht wird. Während der Desorptionsphase bei Unterdruck treten jedoch Druck- und Konzentrationsspitzen auf, insbesondere bei Beginn der Desorptionsphase. Dies ist unerwünscht, wenn auf eine gleichmäßige Ozonversorgung zur Stoffbehandlung Wert gelegt wird.

Zwecks Beseitigung derartiger Druck- und Konzentrationsspitzen läßt man das Ozon bei Unterdruck durch einen Glättungsbehälter (11) strömen, der zwischen der Druckwechseladsorptionsanlage und der Unterdruck erzeugenden Einrichtung angeordnet ist und zumindest teilweise mit Silicagel (12) gefüllt ist.

./...

**0178415**
05.Sept.1984

- 1 -

MESSER GRIESHEIM GMBH                    MG    1479

Kennwort: Ozonglättung                   EM      1163

Erfinder: Dr.O.Leitzke                   Ordner: A
          E.Wolf

## Verfahren zur Gewinnung von Ozon

Die Erfindung betrifft ein Verfahren zur Gewinnung von Ozon zur Behandlung von Stoffen, bei dem das Ozon aus Sauerstoff in einem Ozonerzeuger gewonnen wird.

Ozon ist ein vorzügliches Oxidationsmittel für viele organische und anorganische Verbindungen. Mit Ozon lassen sich z.B. unerwünschte Wasserinhaltsstoffe behandeln, um diese zu entfärben, zu entgiften oder biologisch abbaubar und ausflockbar zu machen. Die Oxidationswirkung von Ozon wird in der Chemie ausgenutzt, um beispielsweise Säure zu produzieren. Mit Ozon werden Zellstoffe gebleicht. Die Oberfläche von Kunststoffen kann durch Ozonbehandlung verändert werden. Auch Gase können mit Ozon zur Reaktion gebracht werden, so kann z.B. Stickstoffmonoxid durch Ozon oxidiert werden.

Für großtechnische Anwendungen wird Ozon in Ozonerzeugern durch stille elektrische Entladung aus Luft oder reinem Sauerstoff gewonnen. Da nur ein Teil des dem Ozonerzeuger zugeführten Sauerstoffs in Ozon umgewandelt wird, muß aus wirtschaftlichen Gründen bei der Ozonerzeugung aus reinem Sauerstoff der nicht umgewandelte Sauerstoff vom Ozon abgetrennt und in den Ozonerzeuger zurückgeführt werden. Diese Sauerstoffabtrennung kann mit Druckwechseladsorptionsanlagen durchgeführt werden. In diesen Anlagen wird bei etwas erhöhtem Druck während einer Adsorptionsphase das Ozon durch Silicagel adsorbiert. Anschließend wird in einer Desorptionsphase das Ozon bei etwas niedrigerem Druck desorbiert. Zur Desorption verwendet man ein Spülgas, was allerdings den Nachteil hat, daß damit das desorbierte Ozon verdünnt wird.

Aus der DE-OS 32 30 922 ist ein Verfahren bekannt, bei dem die Desorption bei unteratmosphärischen Drücken durchgeführt wird. Der Unterdruck wird beispielsweise durch einen Wasserstrahl-Gasverdichter erzeugt. Das Ozon wird unverdünnt aus der Druckwechseladsorptionsanlage abgezogen und mit dem Wasser des Wasserstrahl-Gasverdichters vermischt. Gegebenenfalls kann das Ozon bereits in diesem Wasser die beabsichtigten Reaktionen ausführen.

Bei der praktischen Ausübung des Verfahrens nach der DE-OS 32 30 922 hat sich gezeigt, daß die Ozonkonzentration im Desorptionsgas während des Desorptionsvorganges nicht konstant ist. Zu Beginn des Desorptionsvorganges tritt ein starkes Konzentrationsmaximum auf, während der Desorption nimmt die Ozonkonzentration laufend ab. Außerdem tritt zu Anfang der Desorptionsphase ein erheblicher Druckanstieg in der Desorptionsleitung auf, insbesondere dann, wenn der angelegte Unterdruck niedrig und das Volumen der Desorptionsleitung klein ist.

MG 1479 — 3 — 05.Sept.1984 **0178415**

Die Konzentrationsschwankungen werden hervorgerufen durch die abnehmende Beladung des Silicagels mit Ozon während der Desorptionsphase. Auch übrig gebliebener Restsauerstoff, der beim Adsorptionsvorgang auf dem Silikagel und im Frei- und Porenvolumen des Silicagel-Adsorber-Behälters festgehalten wurde, beeinflußt die Konzentration, da er ebenfalls im Desorptionsgas vorhanden ist. Für viele Anwendungsfälle sind derartige Konzentrations- und Druckschwankungen unerheblich. Sie können sich jedoch nachteilig für die beabsichtigten Reaktionen mit Ozon auswirken, wenn die Reaktions- und Verweilzeiten kurz sind.

Der Erfindung liegt daher die Aufgabe zugrunde, daß aus der DE-OS 32 30 922 bekannte Verfahren so zu verbessern, daß das bei unteratmosphärischen Drücken desorbierte Ozon bei konstantem Druck und kontanter Konzentration der unterdruckerzeugenden Maschine zugeführt werden kann.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Das erfindungsgemäße Verfahren hat den Vorteil, daß Druck- und Konzentrationsspitzen im Desorptionsgas abgefangen und geglättet werden können. Mit geringem Aufwand wird erreicht, das Druck und Konzentration unterhalb gefährlicher Grenzwerte gehalten werden können. Gleichmäßige Ozonkonzentrationen ermöglichen überdies bei Ozonreaktionen kürzere gemeinsame Verweilzeiten der Reaktionspartner.

Die einzuhaltenen Grenzwerte sind für den

**0178415**

Druck 0,6 bar absolut und für die Konzentration
160 g/1 Betriebskubikmeter Gas.

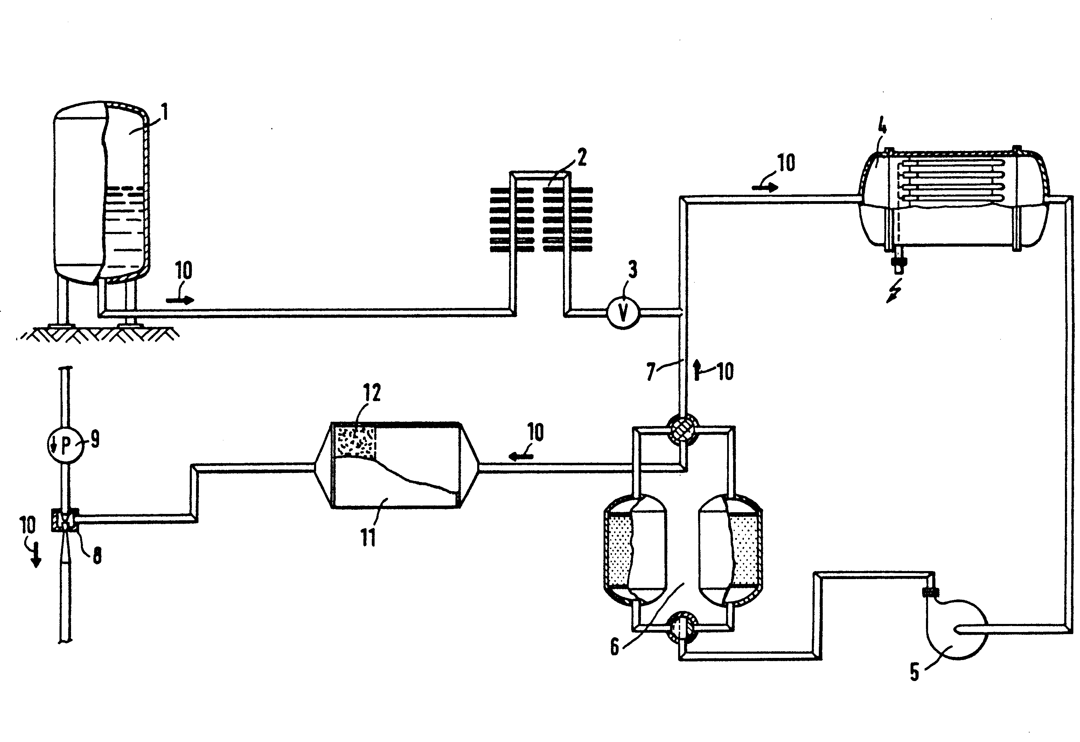

Die Zeichnung veranschaulicht ein Ausführungsbeispiel
der Erfindung, bei welchem der unteratmosphärische Druck
zur Desorption des Ozons durch einen Wasserstrahl-Gasverdichter erzeugt wird.

Der der Ozonerzeugung dienende Sauerstoff wird in flüssiger Form einem Standtank 1 entnommen, im Verdampfer 2
verdampft, im Druckminderer 3 auf einen Druck von
0,5 bis 2 bar absolut entspannt und dem Ozonerzeuger 4
zugeführt. Das im Ozonerzeuger 4 gebildete Ozon-Sauerstoff-Gemisch gelangt mittels des Umlaufgebläses 5 in
die Druckwechseladsorptionsanlage 6. Die Druckwechseladsorptionsanlage 6 besteht aus mindestens zwei mit
Silicagel gefüllten Behältern, die wechselweise im
Takt von 0,5 bis 5 Min. geschaltet werden. In einem
der Behälter wird hierbei Ozon adsorbiert, der Sauerstoff
streicht durch den Behälter und wird durch die Leitung 7
zur Ozonerzeugung sauber und ohne Verschmutzung zurückgeführt.

Aus dem anderen Behälter wird währenddessen Ozon bei
unteratmosphärischem Druck desorbiert. Der Unterdruck
wird mit einem Wasserstrahl-Gasverdichter 8 erzeugt.
Dieser erzeugt auf der Saugseite bis hin zur Druckwechseladsorptionsanlage 6 einen Unterdruck von weniger
als 0,2 bar absolut. Der als strömendes Medium dienende
Wasserstrahl wird durch die Pumpe 9 auf so hohen Druck gebracht, daß der Wasserstrahl-Gasverdichter 8 die geforderte Saugleistung erreicht. Die Strömungsrichtungen sind
durch Pfeile 10 angegeben.

Erfindungsgemäß wird das aus der Druckwechseladsorptionsanlage 6 abgezogene, aus Ozon und Restsauerstoff bestehende Desorptionsgas, bei Unterdruck durch einen Glättungsbehälter 11 geführt, bevor es im Wasserstrahl-Gasverdichter 8 mit Wasser als strömendem Medium vermischt wird.
Dieser Glättungsbehälter 11 hat das dreifache Volumen
eines Behälters der Druckwechseladsorptionsanlage 6 und
ist zu einem Drittel mit Silicagel 12 gefüllt. Das Silicagel 12 ist an der Austrittsseite des Glättungsbehälters
11 angeordnet.

Der Glättungsbehälter 11 bewirkt eine Minderung des
Druckanstiegs bei Beginn der Desorptionsphase und eine
Egalisierung der Ozonkonzentration im Desorptionsgas vor
dessen Eintrag in das Reaktionsmedium. Das im Ozonerzeuger
4 erzeugte Ozon wird also durch Adsorption an Silicagel
in der Druckwechseladsorptionsanlage 6 weitgehend vom
Sauerstoff separiert. Anschließend wird es durch Anlegen
eines Unterdrucks desorbiert. Im dritten Schritt wird es
wieder aufgefangen und gespeichert, und zwar vom Silicagel
12 des Glättungsbehälters 11. Im vierten und letzten
Schritt wird es schließlich ebenfalls bei Unterdruck
gleichmäßig an ein strömendes Medium als Transport- oder
Reaktionsmedium abgegeben.

Selbstverständlich ist das erfindungsgemäße Verfahren nicht
auf Wasserstrahl-Gasverdichter zur Erzeugung des Unterdrukkes angewiesen. Der Unterdruck kann beispielsweise auch
durch einen Injektor und ein gasförmiges Medium als strömendes Medium erzeugt werden. Der Unterdruck kann auch
durch eine Pumpe erzeugt werden und das strömende Medium
lediglich als Transportmittel für das Ozon verwendet werden.

Das Volumen des Glättungsbehälters 11 richtet sich vor allem nach dem angelegten Saugdruck. In der Regel besitzt er das zwei- bis vierfache Behältervolumen eines Behälters der Druckwechseladsorptionsanlage 6. Der Glättungsbehälter 11 kann auch zu mehr als einem Drittel mit Silicagel gefüllt werden. Insgesamt ist anzustreben, daß durch die Kombination des angelegten Saugdruckes, im allgemeinen kleiner als 0,2 bar absolut, des freien Behältervolumens des Glättungsbehälters 11 und des Volumens des Silicagels 12 erreicht wird, daß zu Beginn der Desorptionsphase, also beim Umschalten von der Adsorption in die Desorption und beim Entspannen des im jeweiligen Behälter der Druckwechseladsorptionsanlage 6 eingeschlossenen Gases, die Druckspitze des Desorptionsgases nicht über 0,6 bar absolut hinausgeht und die Ozonkonzentration nicht über 160 g Ozon/1 m³ Gas bezogen auf den Betriebszustand ansteigt. Bei Einhaltung dieser Grenzwerte wird zudem erreicht, daß das Ozon hinter dem Glättungsbehälter 11 in sehr gleichmäßiger Konzentration abgegeben wird.

## Patentansprüche

1. Verfahren zur Gewinnung von Ozon zur Behandlung von Stoffen, bei dem das Ozon aus Sauerstoff in einem Ozonerzeuger (4) gewonnen, bei niedrigen Drücken und Umgebungstemperatur während einer Adsorptionsphase in einer Druckwechseladsorptionsanlage (6) vom nicht zu Ozon umgewandelten Sauerstoff getrennt und der nicht umgewandelte Sauerstoff zum Ozonerzeuger zurückgeführt wird, wonach in einer Desorptionsphase bei unteratmosphärischen Drücken unter Mitwirkung einer Unterdruck erzeugenden Maschine und eines strömenden Mediums das adsorbierte Ozon aus der Druckwechseladsorptionsanlage abgezogen, mit dem strömenden Medium vermischt und der Stoffbehandlung zugeführt wird,
dadurch gekennzeichnet,
daß das aus der Druckwechseladsorptionsanlage abgezogene Ozon einen zumindest teilweise mit Silicagel (12) gefüllten Glättungsbehälter (11) durchströmt, bevor es mit dem strömenden Medium vermischt wird.

2. Verfahren nach Anspruch 1,
dadurch gekennzeichnet,
daß das Volumen des Glättungsbehälters das zwei- bis vierfache des Volumens eines Adsorptionsbehälters der Druckwechseladsorptionsanlage beträgt.

3. Verfahren nach Anspruch 1 oder 2,
dadurch gekennzeichnet,
daß mindestens ein Drittel des Volumens des Glättungsbehälters mit Silicagel ausgefüllt ist.

4. Verfahren nach Anspruch 3,
dadurch gekennzeichnet,
daß das Silicagel an der Austrittsseite des Glättungsbehälters angeordnet ist.

Ba/Hi    - EM 1163